# EUROPÄISCHE PATENTSCHRIFT

(11) **EP 4 491 901 B1**
(45) Veröffentlichungstag und Bekanntmachung des Hinweises auf die Patenterteilung: **29.07.2026**
(21) Anmeldenummer: 24183647.7
(22) Anmeldetag: 21.06.2024
(51) Int. Cl.: F16D 65/12

(54) **BREMSSCHEIBE**
BRAKE DISC
DISQUE DE FREIN

(30) Priorität: 27.06.2023 DE 102023116880
(43) Veröffentlichungstag der Anmeldung: 15.01.2025
(73) Patentinhaber: SHW Brake Systems GmbH, 78532 Tuttlingen (DE)
(72) Erfinder: Keller, Torben, 78532 Tuttlingen (DE); Schmitz, Johann, 78532 Tuttlingen (DE)
(74) Vertreter: Schmid, Wolfgang

(56) Entgegenhaltungen:
- US-A- 6 152 270
- US-A1- 2007 246 314
- US-A1- 2013 175 125
- US-A1- 2020 217 377

## Beschreibung

Die Erfindung betrifft eine Bremsscheibe mit einem Bremsscheibentopf, mit einem zwei Reibringscheiben aufweisenden Reibring und mit mehreren, in jeweiligen Bohrungen von Aufnahmebereichen des Reibrings aufgenommenen, stiftförmigen Verbindungselementen zur Verbindung des Bremsscheibentopfs mit dem Reibring nach der im Oberbegriff von Anspruch 1 näher definierten Art.

Eine gattungsgemäße Bremsscheibe ist aus der DE 10 2006 043 945 A1 bekannt. Dabei ist der Bremsscheibentopf mittels mehrerer um den Umfang desselben angeordneter, in radialer Richtung verlaufender Verbindungselemente mit dem Reibring verbunden. Die zur Aufnahme der Verbindungselemente dienenden, geeignete Bohrungen aufweisende Aufnahmebereiche sind an lediglich einer der beiden Reibringscheiben unmittelbar angebracht, sodass die Mittelachsen der Verbindungselemente gegenüber der Mitte des Reibrings in Axialrichtung desselben versetzt sind. Zwischen den Reibringscheiben ist ein Kühlkanal gebildet, innerhalb dessen sich die Reibringscheiben miteinander verbindende Verbindungsstege befinden. Diese erstrecken sich auch in einen Bereich oberhalb der Bohrungen für die Verbindungselemente.

Eine ähnliche Bremsscheibe ist auch aus der DE 10 2016 122 321 A1 bekannt. Dieses Dokument beschreibt unter anderem auch eine Vielzahl von Ausführungsformen des zur Verbindung des Bremsscheibentopfs mit dem Reibring dienenden Verbindungselements.

Eine Weiterentwicklung der oben beschriebenen Verbundbremsscheiben ist aus der EP 3 712 459 B1 bekannt. Dabei weist der Abstand zwischen dem Bremsscheibentopf und der Mantelfläche am Innendurchmesser des Reibrings eine geringere Breite auf als dies bei üblichen Verbundbremsscheiben der Fall ist, was zu einer besseren Durchströmung des zwischen den Reibringscheiben gebildeten Kühlkanals führt.

Die DE 10 2010 024 389 A1 beschreibt eine Verbindungseinrichtung zwischen einem Reibring und einem Bremsscheibentopf einer Bremsscheibe, wobei der Reibring über mehrere Verbindungselemente mit dem Bremsscheibentopf verbunden ist. Dabei ragen die über den Umfang des Bremsscheibentopfs verteilt angeordneten und mit demselben verbundenen Verbindungselemente in Aussparungen in eine radial innenliegende Umfangswand des Reibrings hinein. Die Bohrungen im Reibring und die Verbindungselemente sind konisch ausgeführt.

Aus der US 2020/217377 A1 ist eine Bremsscheibe mit einem Scheibenkörper bekannt, der ein Bremsband aufweist. Der Scheibenkörper weist des Weiteren einen Verbindungsabschnitt auf, der zur Verbindung der Bremsscheibe mit einer Verbindungsvorrichtung eines Fahrzeugs geeignet ist. Der Verbindungsabschnitt ist mittels in Umfangsrichtung gleichmäßig beabstandeten Verbindungselementen mit dem Bremsband verbunden.

In der DE 10 2009 002 690 A1 ist eine weitere Bremsscheibe mit zwei Reibringen und einem über Verbindungselemente mit den Reibringen verbundenen Scheibentopf beschrieben. Zwischen den beiden Reibringen ist ein Trägersteg ausgebildet, in dem sich ringförmig umlaufende Ausnehmungen befinden.

Aus der DE 10 2008 044 339 B4 ist eine Bremsscheibenanordnung für Scheibenbremsen mit einem Reibring, einem Anbindungsadapter zur Anbindung der Bremsscheibenanordnung an eine Radnabe und mehreren Verbindungselementen zur Verbindung des Reibrings mit dem Anbindungsadapter bekannt. Der Anbindungsadapter weist einen Befestigungsbereich auf, in dem das Verbindungselement ortsfest befestigt ist und der als ein sich vom Außenumfang des Anbindungsadapters in radialer Richtung in diesen hinein erstreckender Rücksprung ausgebildet ist. Des Weiteren weist der Anbindungsadapter eine radiale Ausnehmung zur Zirkulation von Luft auf, die sich vom Innenumfang des Anbindungsadapters zu dessen Befestigungsbereich für das Verbindungselement erstreckt. Der Reibring weist einen Aufnahmebereich auf, in dem das Verbindungselement derart aufgenommen ist, dass der Reibring in Relation zu dem Verbindungselement radial beweglich ist.

Die DE 101 03 639 A1 beschreibt als Hohlstifte ausgebildete Verbindungselemente, die eine verbesserte Kühlung des Reibrings ermöglichen sollen.

Eine belüftete Bremsscheibe mit einem Reibring und einem Tragteil, bei der am Umfang des Tragteils mehrere mit demselben verbundene Verbindungsteile vorhanden sind, welche in am Reibring ausgebildete Fortsätze hineinragen, ist aus der DE 10 2007 054 393 A1 bekannt.

Die EP 2 337 967 B1 beschreibt eine weitere belüftete Bremsscheibe mit einem aus wenigstens zwei von Stegen getrennten Reibringscheiben bestehenden Reibring und einem Tragteil, an dessen Umfang mehrere mit demselben verbundene Verbindungsteile vorhanden sind, die in am Reibring gebildete Trägerstege ragen. Die Trägerstege sind zwischen den Reibringen angeordnet und weisen zu den Reibringscheiben einen Spalt auf. Durch die mittige Anordnung der Trägerstege kann allerdings nur eine begrenzte Menge an Kühlluft in den Kühlkanal des Reibrings einströmen.

In der DE 10 2013 215 997 A1 ist eine Bremsscheibe für eine Scheibenbremse mit einem Bremsscheibentopf und einem mit diesem über Verbindungsmittel verbundenen Reibring beschrieben. Ein Mantel des Bremsscheibentopfs ist mit Abschnitten mit reduzierter Wandstärke und/oder Durchbrüchen versehen, die als am Außenumfang des Bremsscheibentopfmantels befindliche, axial gerichtete Materialaussparungen ausgebildet sind, die zur Platzierung der Verbindungsmittel möglichst nahe am Bremsscheibentopfmantel dienen.

Eine weitere Bremsscheibe ist in der DE 10 2009 021 852 A1 beschrieben. Diese weist einen Bremsscheibentopf und einen Reibring auf, die über stiftförmige Verbindungselemente miteinander verbunden sind. Die Verbindungselemente sind unter Aufweitung einer axial verlaufenden Durchtrittsöffnung des Bremsscheibentopfes in diese eingesetzt.

Eine Bremsscheibe mit einem Reibring und einem Bremsscheibentopf, die mittels derartiger Verbindungselemente verbunden sind, ist außerdem in der DE 198 43 399 A1 beschrieben. Dabei ist eine Wand des Bremsscheibentopfs in Radialrichtung nachgiebig ausgeführt.

Weitere Verbindungselemente, welche integral und einteilig mit dem Reibring hergestellt und an ihrer in dem Reibring aufgenommenen Seite keilförmig ausgeführt sind, sind in der EP 2 275 702 B1 beschrieben.

Die GB 1 032 923 beschreibt eine Bremsscheibe, deren Reibring an die Führungsflächen eines Nabenkörpers derart angegossen ist, dass bei einem Temperaturanstieg und einer damit verbundenen Vergrößerung des Reibrings eine radiale Bewegung desselben relativ zu dem Bremsscheibentopf möglich ist.

Aus der DE 199 18 667 A1 ist eine Bremsscheibe für eine Scheibenbremse eines Fahrzeugs, mit einem Topfabschnitt sowie einem Reibringabschnitt mit zwei Reibringen, die über Stege miteinander verbunden sind, bekannt. Dabei greifen Topf- und Reibringabschnitt so ineinander, dass in axialer Richtung und in Umfangsrichtung ein Formschluss und in radialer Richtung eine begrenzte Verschiebbarkeit gegeben ist.

In der US 5,862,892 A ist ein Verbundrotor für Scheibenbremsen beschrieben, der einen äußeren Reibungsabschnitt mit zwei Ringabschnitten, ein inneres Nabenteil mit einem zentralen Montageabschnitt, und einen Umfangsabschnitt aufweist, der in einen Hohlraum des äußeren Reibungsabschnitt eingegossen ist.

Die US 6 152 270 A beschreibt eine Bremsscheibe für Fahrzeuge mit einer glockenförmigen Nabe und einem mit Belüftungskanälen versehenen Bremsring, dessen Belüftungskanäle zwischen einem inneren Ring und einem äußeren Ring angeordnet sind, wobei die Ringe miteinander über Stege verbunden sind. Der Bremsring weist einen bei der Herstellung der Nabe aus einem Leichtmetalllegierungsguss in der glockenförmigen Nabe versenkbaren Vorsprung auf.

Während des Bremsvorgangs verformt sich bei herkömmlichen Bremsscheiben der Reibring aufgrund der hohen auf denselben einwirkenden Kräfte, wodurch die das stiftförmige Verbindungselement aufnehmende Bohrung von ihrer ursprünglichen kreisrunden Form oval verformt. Dadurch entstehen Zugspannungen, die aufgrund der Anordnung der Verbindungsstege oberhalb der Bohrungen und der dadurch auf die Bohrungen wirkenden Kraft noch zusätzlich verstärkt werden.

Bei diesen Verbundbremsscheiben tritt außerdem regelmäßig die Schwierigkeit auf, dass eine von der Fahrzeuginnenseite zur Öffnung des Bremsscheibentopfs in dem Kühlkanal der Bremsscheibe geleitete Luftströmung nur in begrenztem Maße möglich ist.

Es ist daher Aufgabe der vorliegenden Erfindung, eine Bremsscheibe mit einem Bremsscheibentopf, mit einem zwei Reibringscheiben aufweisenden Reibring und mit mehreren, in jeweiligen Bohrungen von Aufnahmebereichen des Reibrings aufgenommenen, stiftförmigen Verbindungselementen zur Verbindung des Bremsscheibentopfs mit dem Reibring zu schaffen, bei der eine geringere Belastung der zur Aufnahme der stiftförmigen Verbindungselemente dienenden Bohrungen gegeben ist.

Erfindungsgemäß wird diese Aufgabe durch die in Anspruch 1 genannten Merkmale gelöst.

Bei der erfindungsgemäßen Bremsscheibe erstrecken sich die die Reibringscheiben des Reibrings miteinander verbindenden Verbindungsstege, ausgehend von einem radial äußeren Ende der Bohrungen der Aufnahmebereiche, maximal zu einem Drittel der Länge der Bohrungen der Aufnahmebereiche über die Bohrungen der Aufnahmebereiche, so dass die von diesen Verbindungsstegen ausgehenden Belastungen auf die Bohrungen bzw. auf die Aufnahmebereiche, in denen sich die Bohrungen befinden, wesentlich verringert wird.

Des Weiteren weist die erfindungsgemäße Bremsscheibe wenigstens ein von dem jeweiligen Verbindungssteg beabstandetes, sich zumindest zum überwiegenden Teil nicht über die Bohrung erstreckendes, säulenartiges Abstützelement auf, das von dem jeweiligen Aufnahmebereich zu der Reibringscheibe, mit der der Aufnahmebereich nicht verbunden ist, verläuft. Dieses wenigstens eine säulenartige Abstützelement, das zwischen dem Aufnahmebereich und der gegenüberliegenden Reibringscheibe angeordnet ist, sorgt für eine ausreichende Abstützung der beiden Reibringscheiben gegeneinander und gewährleistet trotzdem eine ausreichende Weiterleitung der Kühlluft von dem Bremsscheibentopf in den zwischen den Reibringscheiben gebildeten Kühlkanal. Dadurch, dass sich das säulenartige Abstützelement zumindest zum überwiegenden Teil nicht über die zur Aufnahme des stiftförmigen Verbindungselements dienende Bohrung erstreckt, wird diese durch die während des Bremsvorgangs auftretende thermische Verformung des Reibringes von Druck entlastet, was letztendlich zu wesentlich geringeren Spannungen in den Bohrungen und den Aufnahmebereichen führt.

In einer sehr vorteilhaften Weiterbildung der Erfindung kann vorgesehen sein, dass sich das wenigstens eine säulenartige Abstützelement maximal zu einem Drittel des Durchmessers der Bohrung über dieselbe erstreckt. Auf diese Weise wird die zur Aufnahme des stiftförmigen Verbindungselements dienende Bohrung in ausreichender Weise von Druck entlastet, sodass sich geringere Spannungen in den Bohrungen und den Aufnahmebereichen ergeben.

In einer weiteren sehr vorteilhaften Weiterbildung der Erfindung kann vorgesehen sein, dass von den Aufnahmebereichen zwei von dem jeweiligen Verbindungssteg beabstandete, sich zumindest zum überwiegenden Teil nicht über die Bohrung erstreckende, säulenartige Abstützelemente zu der anderen Reibringscheibe verlaufen. Dies führt zu einer wesentlichen Verbesserung der Stabilität der Bremsscheibe.

Um die Einleitung von Kühlluft in den Kühlkanal noch deutlich zu verbessern, kann in einer weiteren vorteilhaften Ausgestaltung der Erfindung vorgesehen sein, dass sich zwischen den beiden säulenartigen Abstützelementen eine Durchlassöffnung zu dem Kühlkanal befindet.

Eine weitere Ausgestaltung der Erfindung kann darin bestehen, dass das wenigstens eine säulenartige Abstützelement im Wesentlichen parallel zu einer Drehachse der Bremsscheibe verläuft. Dies hat zu verbesserten Ergebnissen bezüglich der Festigkeit der Bremsscheibe geführt.

Um sowohl im Hinblick auf die Stabilität zwischen den Reibringscheiben als auch auf die Einleitung von Kühlluft in den Kühlkanal zwischen denselben eine Verbesserung zu erzielen, kann des Weiteren vorgesehen sein, dass das wenigstens eine säulenartige Abstützelement einen tropfenförmigen, rhombusförmigen oder kreisförmigen Querschnitt aufweist, wobei sich bezüglich der Erleichterung der Einströmung von Kühlluft in den Kühlkanal der Bremsscheibe ein tropfenförmiger Querschnitt als besonders vorteilhaft erwiesen hat.

Nachfolgend sind Ausführungsbeispiele der Erfindung anhand der Zeichnung prinzipmäßig dargestellt.

Es zeigt:
- Fig. 1: eine perspektivische Ansicht einer ersten Ausführungsform der erfindungsgemäßen Bremsscheibe;
- Fig. 2: einen vergrößerten Ausschnitt der Bremsscheibe aus Fig. 1 mit einer Darstellung der Verbindungsstege und der säulenartigen Abstützelemente;
- Fig. 3: einen Schnitt nach der Linie III-III aus Fig. 2;
- Fig. 4: einen Schnitt nach der Linie IV-IV aus Fig. 2;
- Fig. 5: einen Schnitt nach der Linie V-V aus Fig. 3;
- Fig. 6: eine perspektivische Ansicht einer zweiten Ausführungsform der erfindungsgemäßen Bremsscheibe;
- Fig. 7: einen vergrößerten Ausschnitt der Bremsscheibe aus Fig. 6 mit einer Darstellung der Verbindungsstege und der säulenartigen Abstützelemente;
- Fig. 8: einen Schnitt nach der Linie VIII-VIII aus Fig. 7;
- Fig. 9: einen Schnitt nach der Linie IX-IX aus Fig. 7; und
- Fig. 10: einen Schnitt nach der Linie X-X aus Fig. 8.

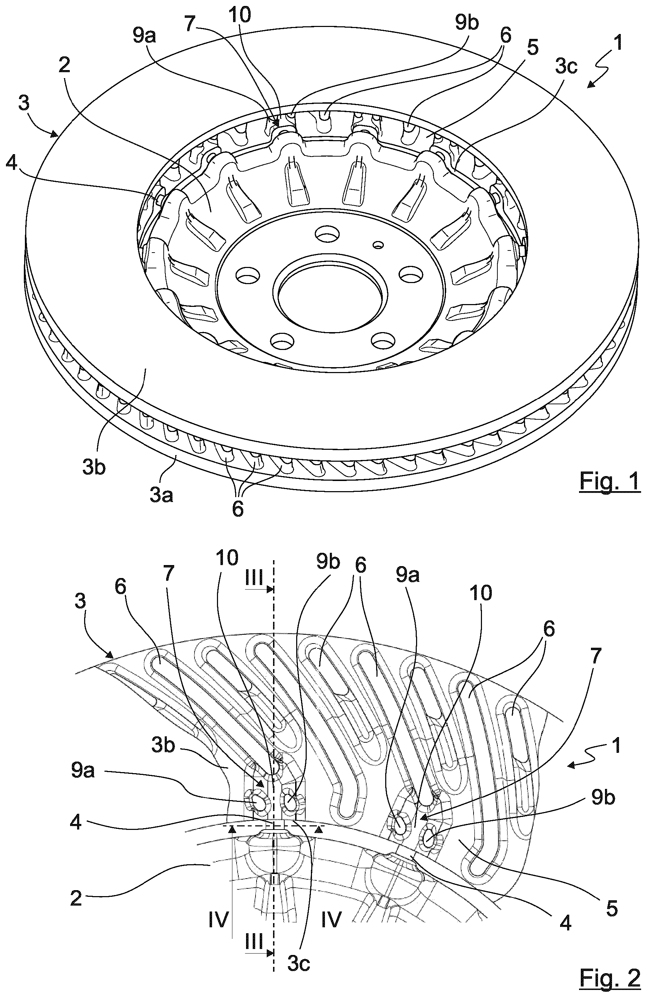

Fig. 1 zeigt eine innenbelüftete, als Verbundbremsscheibe ausgebildete Bremsscheibe 1, die in an sich bekannter Weise einen zentralen Bremsscheibentopf 2 aufweist, um dessen Umfang ein Reibring 3 angeordnet ist. Der Reibring 3 weist zwei Reibringscheiben 3a und 3b auf und ist mittels mehrerer sich in radialer Richtung von dem Bremsscheibentopf 2 zu dem Reibring 3 erstreckender stiftförmiger Verbindungselemente 4 mit dem Bremsscheibentopf 2 verbunden. Der Reibring 3 ist dabei gleitend auf den stiftförmigen Verbindungselemente 4 gelagert, wodurch er sich während einer thermischen Belastung der Bremsscheibe 1 ungehindert und frei radial ausdehnen kann und dadurch weniger anfällig bezüglich einer Rissbildung ist.

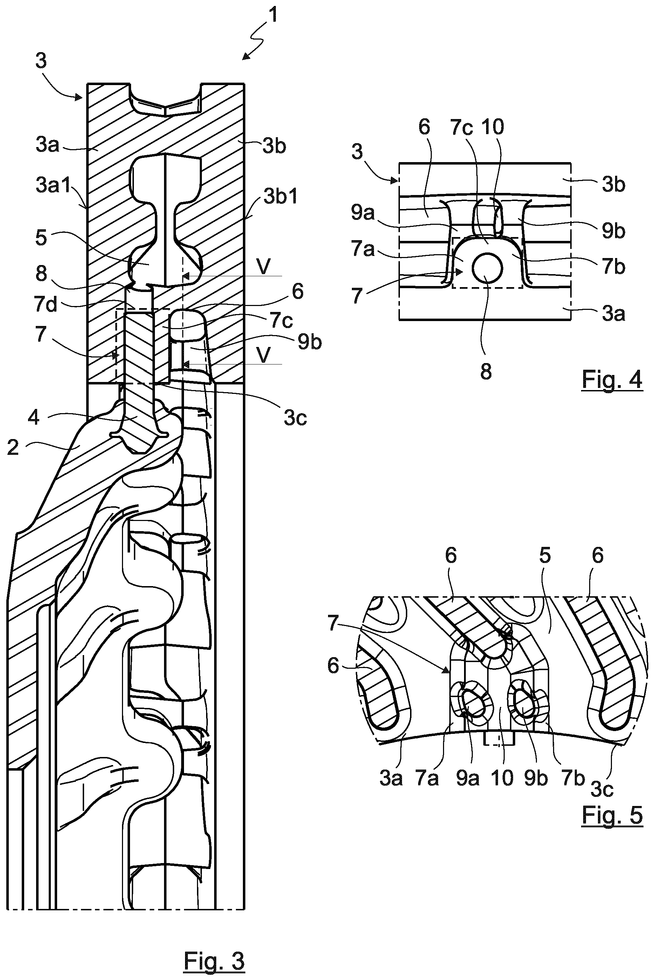

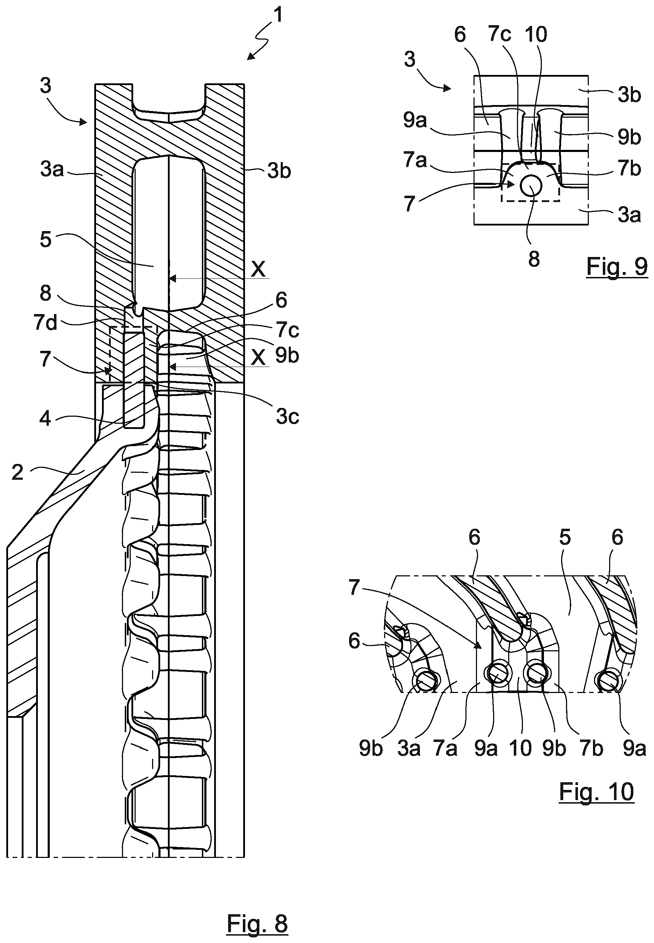

An ihren äußeren Planflächen weisen die Reibringscheiben 3a und 3b jeweilige lediglich in den Figuren 3 und 8 bezeichnete Reibflächen 3a1 und 3b1 auf. Zwischen den Reibringscheiben 3a und 3b ist ein Kühlkanal 5 gebildet, durch den während des Betriebs der Bremsscheibe 1 in an sich bekannter Weise Kühlluft aus Richtung des Bremsscheibentopfs 2 durch den Reibring 3 nach außerhalb der Bremsscheibe 1 strömen kann. Innerhalb des Kühlkanals 5 befinden sich mehrere Verbindungsstege 6, mittels derer die Reibringscheiben 3a und 3b in ebenfalls an sich bekannter Weise verbunden sind bzw. an denen sich die Reibringscheiben 3a und 3b abstützen. Die Verbindungsstege 6 nehmen bei Belastung, zum Beispiel bei einem Bremsvorgang, die auf die Reibringscheiben 3a und 3b wirkenden Kräfte auf. Des Weiteren weist der Reibring 3 mehrere Aufnahmebereiche 7 zur Aufnahme der stiftförmigen Verbindungselemente 4 auf. Es ist demnach Aufgabe der Aufnahmebereiche 7, die stiftförmigen Verbindungselemente 4 in ihrem von dem Bremsscheibentopf 2 abgewandten Bereich, d.h. ihrem Schaftbereich, aufzunehmen. Die Aufnahmebereiche 7 sind an lediglich einer der beiden Reibringscheiben, im vorliegenden Fall an der Reibringscheibe 3a, unmittelbar angebracht, d.h. sie sind mit der anderen Reibringscheibe 3b nicht direkt verbunden. Diese Verbindung der Aufnahmebereiche 7 mit der Reibringscheibe 3a erfolgt während des Gießens des Reibrings 3, indem die Aufnahmebereiche 7 beim Gießen des Reibrings 3 ebenfalls gegossen werden, was wiederum durch eine entsprechende Ausgestaltung der nicht dargestellten Gießform bewerkstelligt wird. Die Aufnahmebereiche 7 sind mit der Reibringscheibe 3b lediglich mittelbar verbunden, und zwar über die Verbindungsstege 6 und über zu einem späteren Zeitpunkt noch näher erläuterte Abstützelemente 9a und 9b.

Die Begrenzung der Aufnahmebereiche 7 ist in den Figuren 3 und 4 jeweils mittels gestrichelter Linien angedeutet. Die Aufnahmebereiche 7 erstrecken sich demnach in Umfangsrichtung der Bremsscheibe 1 von einer ersten Seitenwand 7a über die Aufnahmebohrung 8 zu einer gegenüberliegenden, zweiten Seitenwand 7b, in axialer Richtung von der Reibringscheibe 3a über die Aufnahmebohrung 8 zu einem oberen Ende 7c und, wie in Fig. 3 zu erkennen, in radialer Richtung von einem Innendurchmesser 3c des Reibrings 3 entlang der Aufnahmebohrung 8 bis zu einem hinteren Ende 7d. Die Aufnahmebereiche 7 umfassen damit nicht die Verbindungsstege 6, die als separat von den Aufnahmebereichen 7 anzusehen sind.

Der Bremsscheibentopf 2 bildet in an sich bekannter Weise die Verbindung der Bremsscheibe 1 zu einem nicht dargestellten Fahrwerk eines mit der Bremsscheibe 1 ausgestatteten Kraftfahrzeugs. Des Weiteren greifen auf ebenfalls an sich bekannte Weise jeweilige, in den Figuren ebenfalls nicht dargestellte Bremsbeläge an dem Reibring 3 an, um eine gewünschte Verzögerung des Kraftfahrzeugs zu erreichen. Dabei übertragen die stiftförmigen Verbindungselemente 4 das auf den Reibring 3 wirkende Bremsmoment auf den Bremsscheibentopf 2 und somit auf das Kraftfahrzeug. Die stiftförmigen Verbindungselemente 4 sind somit sehr hohen Belastungen ausgesetzt und es ist essentiell für die Wirkung der Bremsscheibe, dass die stiftförmigen Verbindungselemente 4 intakt bleiben. Dasselbe gilt auch für die Aufnahmebereiche 7, in denen die stiftförmigen Verbindungselemente 4 aufgenommen sind.

Zur Aufnahme der stiftförmigen Verbindungselemente 4 sind die bereits oben genannten Aufnahmebereiche 7 mit jeweiligen Bohrungen 8 versehen, in welche die stiftförmigen Verbindungselemente 4 eingesteckt werden, bevor in einem nachfolgenden Schritt der Bremsscheibentopf 2 an die stiftförmigen Verbindungselemente 4 und somit an den Reibring 3 angegossen wird. Die Bohrungen 8 sind im vorliegenden Fall als sich in einen der Kühlkanäle 5 des Reibrings 3 öffnende Durchgangsbohrungen ausgeführt, sie können jedoch auch als Sacklochbohrungen ausgeführt sein, d. h. sie können so ausgeführt sein, dass sie sich nicht in einen der Kühlkanäle 5 des Reibrings 3 öffnen. Eine solche Lösung, durch die ein Eintreten von Wasser in die Bohrungen 8 und die sich daraus ergebenden Korrosionsprobleme vermieden werden, kann unabhängig von den anderen hierin beschriebenen Ausführungsformen der Bremsscheibe 1 sein.

Diejenigen Bereiche des Bremsscheibentopfs 2, in denen dieser an die stiftförmigen Verbindungselemente 4 angegossen wird, werden dabei so klein wie möglich und so groß wie zum Aufnehmen der über den Reibring 3 und die stiftförmigen Verbindungselemente 4 in den Bremsscheibentopf 2 eingeleiteten Kräfte notwendig ist ausgelegt.

Um zu verhindern, dass die Verbindungsstege 6 eine zu große Belastung auf die Aufnahmebereiche 7 und insbesondere auf die Bohrungen 8, in denen die stiftförmigen Verbindungselemente 4 angeordnet sind, aufbringen, erstrecken sich die Verbindungsstege 6 zumindest nicht vollständig über die Bohrungen 8 der Aufnahmebereiche 7. Allgemein erstrecken sich die Verbindungsstege 6, ausgehend von einem radial äußeren Ende der Bohrungen 8 der Aufnahmebereiche 7, also von dem hinteren Ende 7d der Aufnahmebereiche 7 bzw. dem dem Bremsscheibentopf 2 abgewandten Ende derselben, maximal zu einem Drittel der Länge der Bohrungen 8 der Aufnahmebereiche 7 über die Bohrungen 8 der Aufnahmebereiche 7. Im vorliegenden Fall erstrecken sich die Verbindungsstege 6, ausgehend von einem radial äußeren Ende der Bohrungen 8 der Aufnahmebereiche 7, also von dem hinteren Ende 7d der Aufnahmebereiche 7, maximal zu einem Fünftel der Länge der Bohrungen 8 der Aufnahmebereiche 7 über die Bohrungen 8 der Aufnahmebereiche 7. Mit anderen Worten, die Verbindungsstege 6 sind gegenüber den aus dem Stand der Technik bekannten Lösungen, bei denen diese bis annähernd an den inneren Rand des Reibrings 3 verlaufen, in radialer Richtung deutlich verkürzt.

Zusätzlich ist wenigstens ein, im vorliegenden Fall zwei säulenartige Abstützelemente 9a und 9b vorgesehen, die sich von dem mit der einen Reibringscheibe 3a verbundenen Aufnahmebereich 7, insbesondere von dessen Seitenwänden 7a und 7b, zu der anderen Reibringscheibe 3b erstrecken.

Die Aufnahmebereiche 7 umfassen damit nicht die Abstützelemente 9a, 9b, wie aus den gestrichelten Grenzen des Aufnahmebereichs 7 in den Figuren 3 und 4 ersichtlich ist.

Das wenigstens eine säulenartige Abstützelement 9a bzw. 9b ist dabei von dem jeweiligen Verbindungssteg 6 beabstandet und erstreckt sich zumindest zu seinem überwiegenden Teil nicht über die Bohrung 8 des Aufnahmebereichs 7. Insbesondere erstreckt sich das wenigstens eine säulenartige Abstützelement 9a bzw. 9b bzw. im vorliegenden Fall beide maximal säulenartigen Abstützelemente 9a und 9b zu einem Drittel des Durchmessers der Bohrung 8 über dieselbe. Die Bohrung 8 ist also im Wesentlichen frei von den Verbindungsstegen 6 und dem wenigstens einen säulenartigen Abstützelement bzw. den säulenartigen Abstützelementen 9a und 9b. Auf diese Weise wird das Einleiten von Kraft auf denjenigen Bereich der Aufnahmebereiche 7 vermieden, in dem sich die Bohrung 8 befindet und der ohnehin durch die Bohrung 8 geschwächt ist. Das wenigstens eine säulenartige Abstützelement 9a bzw. 9b stellt demnach eine Art Fortführung des Verbindungsstegs 6 dar, es wird jedoch sichergestellt, dass auf die Bohrung 8 des Aufnahmebereichs 7 ein gegenüber bekannten Lösungen mit einem durchgehenden Verbindungssteg geringerer Druck aufgebracht wird.

Dabei ist das eine bzw. erste säulenartige Abstützelement 9a auf einer ersten Seitenwand 7a des Aufnahmebereichs 7 angeordnet und das andere bzw. zweite säulenartige Abstützelement 9b ist auf einer gegenüberliegenden Seitenwand 7b des Aufnahmebereichs 7 angeordnet. Durch diese Anordnung werden die zwischen den Reibringscheiben 3a und 3b auf die säulenartigen Abstützelemente 9a und 9b wirkenden Kräfte über die Seitenwände 7a und 7b des Anbindungsbereichs 7 und nicht über die sich darin befindende Bohrung 8 geleitet.

Wie bereits erwähnt, verlaufen also in dem in den Figuren 1 bis 5 dargestellten Ausführungsbeispiel der Bremsscheibe 1 zwei von dem jeweiligen Verbindungssteg 6 beabstandete säulenartige Abstützelemente 9a und 9b von dem mit der Reibringscheibe 3a verbundenen Aufnahmebereich 7 zu der anderen Reibringscheibe 3b, die sich zumindest zum überwiegenden Teil nicht über die Bohrung 8 erstrecken. Des Weiteren ist in den Figuren erkennbar, dass sich zwischen den beiden säulenartigen Abstützelementen 9a und 9b eine Durchlassöffnung 10 zu dem Kühlkanal 5 befindet, so dass die Luft aus dem Bremsscheibentopf 2 an den säulenartigen Abstützelemente 9a und 9b vorbei in den Kühlkanal 5 gelangen kann.

Das wenigstens eine säulenartige Abstützelement, im vorliegenden Fall beide säulenartigen Abstützelemente 9a und 9b, verlaufen im Wesentlichen parallel zu einer in Fig. 3 mit "x" bezeichneten Drehachse der Bremsscheibe 1.

In dem Schnitt von Fig. 5 ist erkennbar, dass das wenigstens eine säulenartige Abstützelement bzw. im vorliegenden Fall beide säulenartigen Abstützelemente 9a und 9b einen tropfenförmigen bzw. eiförmigen Querschnitt aufweist. Alternativ wäre es auch möglich, die säulenartigen Abstützelemente 9a und/oder 9b mit einem rombusförmigen, einem kreisförmigen oder einem anderen geeigneten Querschnitt auszuführen.

Grundsätzlich ist auch denkbar, dass sich der Querschnitt des säulenartigen Abstützelements 9a bzw. 9b über die Länge seines Verlaufs von dem Aufnahmebereich 7 zu der Reibringscheibe 3b verändert.

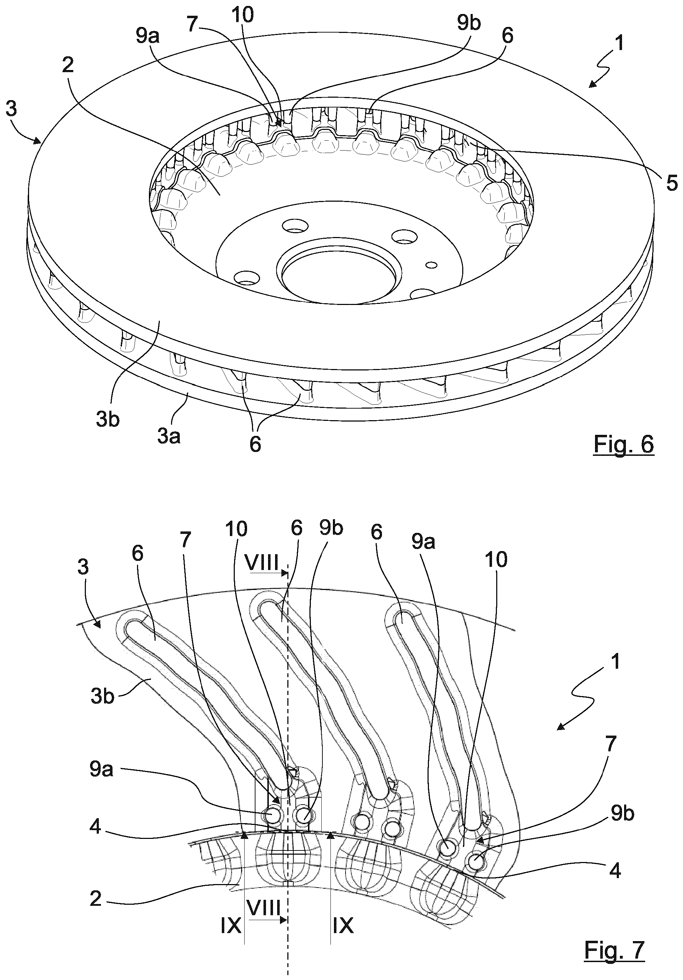

Nachfolgend wird eine zweite Ausführungsform der Bremsscheibe 1 anhand der Figuren 6 bis 10 beschrieben, wobei lediglich auf die Unterschiede gegenüber der ersten Ausführungsform der Bremsscheibe 1 gemäß der Figuren 1 bis 5 eingegangen wird. Diese Unterschiede betreffen jedoch nicht die säulenartigen Abstützelemente 9a und 9b.

Bei der Ausführungsform der Bremsscheibe 1 gemäß der Figuren 6 bis 10 sind die stiftförmigen Verbindungselemente 4 im Wesentlichen zylindrisch ausgeführt und weisen einen Durchmesser von 3 - 6,5 mm auf. Die Länge der stiftförmigen Verbindungselemente 4 beträgt bei der in den Figuren 6 bis 10 dargestellten Ausführungsform der Bremsscheibe 1 20 - 30 mm.

In der perspektivischen Ansicht der Bremsscheibe 1 gemäß Fig. 6 ist zu erkennen, dass diese eine wesentlich größere Anzahl an stiftförmigen Verbindungselementen 4 als bekannte Bremsscheiben aufweist. Insbesondere handelt es sich um eine Anzahl von 21 - 42, vorzugsweise 27 - 32, der stiftförmigen Verbindungselemente 4. Diese hohe Anzahl an stiftförmigen Verbindungselementen 4 ermöglicht die oben beschriebene stark verringerte Dimensionierung der stiftförmigen Verbindungselemente 4 im Hinblick auf deren Durchmesser und deren Länge.

Bei der ersten Ausführungsform der Bremsscheibe 1 gemäß Fig. 1 bis 5, ist zwischen dem Bremsscheibentopf 2 und dem Reibring 3 ein nicht näher bezeichneter Spalt vorhanden, welcher vergleichsweise groß ist und durch den sehr viel der an sich für die Kühlung des wie oben beschrieben von Luft durchströmbaren Reibrings 3 notwendigen Kühlluft abströmen und dadurch zu einer starken Erwärmung des Reibrings 3 führen kann.

Demgegenüber weist der Spalt zwischen dem Bremsscheibentopf 2 und dem Reibring 3 bei der Bremsscheibe 1 gemäß der Figuren 6 bis 10 eine wesentlich geringere Breite als üblich auf. Dadurch kann weniger Luft durch den Spalt abströmen und es gelangt mehr Luft in den zwischen den Reibringscheiben 3a und 3b des Reibrings 3 vorhandenen Kühlkanal 5, sodass der Reibring 3 besser gekühlt wird.

## Patentansprüche

1. Bremsscheibe (1) mit einem Bremsscheibentopf (2), mit einem zwei Reibringscheiben (3a,3b) aufweisenden Reibring (3) und mit mehreren, in jeweiligen Bohrungen (8) von Aufnahmebereichen (7) des Reibrings (3) aufgenommenen, stiftförmigen Verbindungselementen (4) zur Verbindung des Bremsscheibentopfs (2) mit dem Reibring (3), wobei die Aufnahmebereiche (7) an lediglich einer der beiden Reibringscheiben (3a) unmittelbar angebracht sind, wobei zwischen den Reibringscheiben (3a,3b) ein Kühlkanal (5) gebildet ist, und wobei sich innerhalb des Kühlkanals (5) die Reibringscheiben (3a,3b) miteinander verbindende Verbindungsstege (6) befinden,
**dadurch gekennzeichnet, dass**
sich die Verbindungsstege (6), ausgehend von einem radial äußeren Ende der Bohrungen (8) der Aufnahmebereiche (7), maximal zu einem Drittel der Länge der Bohrungen (8) der Aufnahmebereiche (7) über die Bohrungen (8) der Aufnahmebereiche (7) erstrecken, und dass von den Aufnahmebereichen (7) wenigstens ein von dem jeweiligen Verbindungssteg (6) beabstandetes, sich zumindest zum überwiegenden Teil nicht über die Bohrung (8) erstreckendes, säulenartiges Abstützelement (9a,9b) zu der anderen Reibringscheibe (3b) verläuft.

2. Bremsscheibe nach Anspruch 1,
**dadurch gekennzeichnet, dass**
sich das wenigstens eine säulenartige Abstützelement (9a,9b) maximal zu einem Drittel des Durchmessers der Bohrung (8) über dieselbe erstreckt.

3. Bremsscheibe nach Anspruch 1 oder 2,
**dadurch gekennzeichnet, dass**
von den Aufnahmebereichen (7) zwei von dem jeweiligen Verbindungssteg (6) beabstandete, sich zumindest zum überwiegenden Teil nicht über die Bohrung (8) erstreckende, säulenartige Abstützelemente (9a,9b) zu der anderen Reibringscheibe (3b) verlaufen.

4. Bremsscheibe nach Anspruch 3,
**dadurch gekennzeichnet, dass**
sich zwischen den beiden säulenartigen Abstützelementen (9a,9b) eine Durchlassöffnung (10) zu dem Kühlkanal (5) befindet.

5. Bremsscheibe nach einem der Ansprüche 1 bis 4,
**dadurch gekennzeichnet, dass**
das wenigstens eine säulenartige Abstützelement (9a,9b) im Wesentlichen parallel zu einer Drehachse (x) der Bremsscheibe (1) verläuft.

6. Bremsscheibe nach einem der Ansprüche 1 bis 5,
**dadurch gekennzeichnet, dass**
das wenigstens eine säulenartige Abstützelement (9a,9b) einen tropfenförmigen, rhombusförmigen oder kreisförmigen Querschnitt aufweist.

## Claims

1. Brake disc (1) comprising a brake disc housing (2), a friction ring (3) comprising two friction ring discs (3a, 3b), and a plurality of pin-shaped connecting elements (4) received in respective bores (8) of receiving regions (7) of the friction ring (3) for connecting the brake disc housing (2) to the friction ring (3), wherein the receiving regions (7) are attached directly to only one of the two friction ring discs (3a), wherein a cooling channel (5) is formed between the friction ring discs (3a, 3b), and wherein connecting webs (6) connecting the friction ring discs (3a, 3b) to one another are located within the cooling channel (5),
**characterised in that**
the connecting webs (6), starting from a radially outer end of the bores (8) of the receiving regions (7), extend across the bores (8) of the receiving regions (7) by a maximum of one third of the length of the bores (8) of the receiving regions (7), and that, from the receiving regions (7), at least one column-like support element (9a, 9b) spaced apart from the respective connecting web (6) and extending, at least for the most part, not across the bore (8) extends towards the other friction ring disc (3b).

2. Brake disc according to claim 1,
**characterised in that**
the at least one column-like support element (9a, 9b) extends across the bore (8) by a maximum of one third of the diameter of the bore (8).

3. Brake disc according to claim 1 or 2,
**characterised in that**
from the receiving regions (7), two column-like support elements (9a, 9b) spaced apart from the respective connecting web (6) and extending, at least for the most part, not across the bore (8) extend towards the other friction ring disc (3b).

4. Brake disc according to claim 3,
**characterised in that**
a passage opening (10) leading to the cooling channel (5) is located between the two column-like support elements (9a, 9b).

5. Brake disc according to any one of claims 1 to 4,
**characterised in that**
the at least one column-like support element (9a, 9b) extends substantially parallel to an axis of rotation (x) of the brake disc (1).

6. Brake disc according to any one of claims 1 to 5,
**characterised in that**
the at least one column-like support element (9a, 9b) has a teardrop-shaped, rhombusshaped or circular cross-section.

## Revendications

1. Disque de frein (1) comprenant un chapeau de disque de frein (2), une bague de friction (3) présentant deux disques de friction (3a,3b), et plusieurs éléments de liaison en forme de tige (4) logés dans des perçages (8) de zones de réception (7) de la bague de friction (3) pour la liaison du chapeau de disque de frein (2) avec la bague de friction (3), les zones de réception (7) étant disposées uniquement sur l'un des deux disques de friction (3a), un canal de refroidissement (5) étant formé entre les disques de friction (3a,3b), et des ponts de liaison (6) reliant les disques de friction (3a,3b) se trouvant à l'intérieur du canal de refroidissement (5), **caractérisé en ce que** les ponts de liaison (6), à partir d'une extrémité radiale externe des perçages (8) des zones de réception (7), s'étendent au maximum sur un tiers de la longueur des perçages (8) des zones de réception (7) sur les perçages (8) des zones de réception (7), et qu'au moins un élément de support de type colonne (9a,9b), espacé du pont de liaison (6) respectif, ne s'étendant au moins pour la majeure partie pas sur le perçage (8), s'étend de la zone de réception (7) vers l'autre disque de friction (3b).

2. Disque de frein selon la revendication 1, **caractérisé en ce que** au moins un élément de support de type colonne (9a,9b) s'étend au maximum sur un tiers du diamètre du perçage (8) sur celui-ci.

3. Disque de frein selon la revendication 1 ou 2, **caractérisé en ce que** deux éléments de support de type colonne (9a,9b), espacés du pont de liaison (6) respectif, ne s'étendant au moins pour la majeure partie pas sur le perçage (8), s'étendent de la zone de réception (7) vers l'autre disque de friction (3b).

4. Disque de frein selon la revendication 3, **caractérisé en ce que** une ouverture de passage (10) vers le canal de refroidissement (5) se trouve entre les deux éléments de support de type colonne (9a,9b).

5. Disque de frein selon l'une des revendications 1 à 4, **caractérisé en ce que** au moins un élément de support de type colonne (9a,9b) s'étend essentiellement parallèle à un axe de rotation (x) du disque de frein (1).

6. Disque de frein selon l'une des revendications 1 à 5, **caractérisé en ce que** au moins un élément de support de type colonne (9a,9b) présente une section en forme de goutte, en forme de losange ou en forme de cercle.
